Europäisches Patentamt

European Patent Office

Office européen des brevets

(19)

(11) Publication number: **0 217 540**
**B1**

(12) # EUROPEAN PATENT SPECIFICATION

(45) Date of publication of the patent specification:
14.06.89

(51) Int. Cl.⁴: **F 16 H 5/40**

(21) Application number: **86306658.5**

(22) Date of filing: **28.08.86**

(54) **Method and apparatus for controlling the shifting of an automatic transmission in a vehicle.**

(30) Priority: **29.08.85 JP 190094/85**

(43) Date of publication of application:
**08.04.87 Bulletin 87/15**

(45) Publication of the grant of the patent:
**14.06.89 Bulletin 89/24**

(84) Designated Contracting States:
**DE FR GB IT SE**

(56) References cited:
**EP-A- 0 130 811**
**EP-A- 0 130 812**
**EP-A- 0 134 646**
**DD-A- 73 694**
**DD-A- 128 820**
**DE-A- 3 104 650**
**DE-A- 3 314 111**
**DE-B- 1 575 847**
**GB-A- 2 166 208**

(73) Proprietor: **Isuzu Motors Limited, 6-22-10 Minamiooi Shinagawa-ku, Tokyo 140 (JP)**

(72) Inventor: **Tamai, Hidefumi, 3070-17, Kokubu, Ebina-shi Kanagawa (JP)**

(74) Representative: **Brunner, Michael John et al, GILL JENNINGS & EVERY 53-64 Chancery Lane, London WC2A 1HN (GB)**

ACTORUM AG

## Description

This invention relates to a method and apparatus for controlling the shifting of an automatic transmission in an automotive vehicle and, more particularly, to such a method and apparatus which makes it possible to control reliably the amount of shifting of a shift actuator in a parallel shaft-type gear transmission.

In an automatic transmission for an automotive vehicle, gear shifting is performed by a shift actuator operated by hydraulic or pneumatic pressure. For this reason, the completion of the gear shifting operation cannot be sensed by the driver. Accordingly, a conventional shift control unit for an automatic transmission is adapted to detect completion of gear shifting by using a position sensor, such as a switch, in order to prevent a gear shifting abnormality such as failure to engage the gear or an excessive degree of gear shifting. However, since it is necessary that such a position sensor switch be provided at a position where it can be actuated in response to the actual state of meshing of the gear of the transmission, difficulties are encountered in selecting the proper position and in mounting the switch at this position. Moreover, since vehicle transmissions are somewhat different from one another because of slight differences in manufacture, the gear shift positions are not always the same from one transmission to another. Consequently, adopting the switch-type position sensor requires a troublesome adjustment for each and every transmission, so that the difference between transmissions is a problem which cannot be dealt with easily.

The Applicant has proposed, in Japanese Patent Application N° 59-239125, a shift control unit which operates on a learning principle. A detent mechanism for shift positioning is used to sense the stroke position of a switch actuator at such time as the shift position is in a stable state, with a value indicative of the sensed position serving as a target value for the next gear shifting operation. However, the proposed control unit is not problem-free. Specifically, since a learned gear shift target value does not exist for the first gear shifting operation, reliance is placed upon a set target value for this first operation. This makes it impossible to deal with the aforementioned problem of the discrepancy in gear shifting positions caused by the slight variations in transmission manufacture. There is concern that, in extreme cases, the transmission will not be placed in gear, because of an inadequate gear shifting operation.

Accordingly, an object of the present invention is to provide a shifting control method and apparatus in which, in a shift control unit for a vehicular automatic transmission, the shift stroke of each gear stage peculiar to the automatic transmission is detected, so that optimum gear shifting control can be performed for each and every transmission.

According to one aspect of the invention, there is provided a method of controlling the shifting of an automotive automatic transmission which includes a detent mechanism for performing shift positioning of a shift fork shaft which actuates a clutch sleeve of the transmission, a shift actuator for actuating the shift fork shaft, a stroke sensor for sensing an operating position of the shift actuator, and an electronic control unit for controlling driving of the shift actuator, the method being characterised by a first step in which the electronic control unit operates the shift actuator at an initial shifting operation of the transmission to move the shift fork shaft for each and every gear stage to an initial deepest target gear shift position; a second step in which the electronic control unit removes driving force from the shift actuator at the end of the first step; a third step, executed at the end of the second step, in which the electronic control unit reads in a value from the stroke sensor which prevails when the detent mechanism is in a stable state; and a fourth step, executed after the third step, in which the electronic control unit selects the value read from the stroke sensor as a target value for the next shifting operation.

According to another aspect of the invention, there is provided a shift control apparatus for a vehicular automatic transmission comprising a respective shift fork shaft for operating each clutch sleeve of the transmission, each shaft being equipped with a shift positioning detent mechanism, the shift control apparatus being characterised by a shift actuator for actuating the shift fork shaft; a stroke sensor for sensing an operating position of the shift actuator; reading means for reading in a value from the stroke sensor which prevails in a state where the detent mechanism has stabilised, after the shift actuator has moved the shift fork shaft for each gear stage to an initial deepest target gear shift position in an initial shifting operation of the transmission and driving force has been removed from the shift actuator; and means for selecting the value read by the reading means as a target value for the next shifting operation.

By use of the invention, the gear shift target value is set to the deepest gear shift position from the viewpoint of design and manufacture at the initial gear shifting operation, the gear shift is effected, the shift stroke position is sensed in a stage where the detent mechanism of the transmission is stabilised, and this position is adopted as the shift target value for the next shifting operation. This makes it possible reliably to prevent slipping of the gears due to an inadequate gear shifting operation caused by control based merely on design values.

An embodiment of the invention will now be described, by way of example, with reference to the accompanying drawings, in which

Fig. 1 is a schematic diagram of an apparatus according to the invention for controlling the shifting of a vehicular automatic transmission, and

Fig. 2 is a flowchart illustrating a shift control method according to the invention.

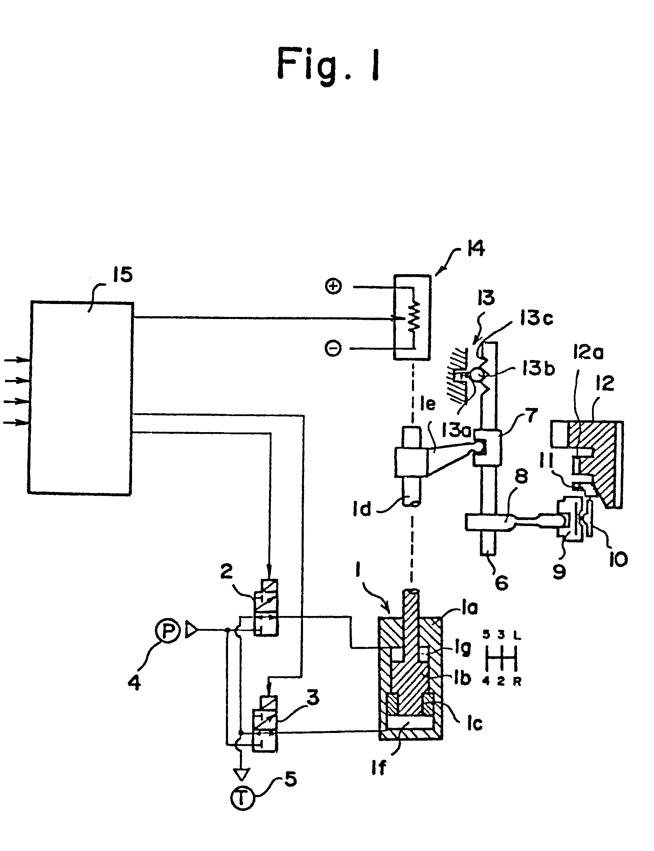

Referring to Fig. 1 of the drawings, a shift actuator 1, which is designed so as to be stoppable at any of three positions, comprises a stepped cylinder 1a, a first piston 1b, and a cylindrical second piston 1c fitted on to the first piston 1b. A gear shift lever 1e of a transmission is mounted on one end of a piston rod 1d of the first piston 1b. The piston rod 1d is in a neutral attitude when hydraulic pressure is acting upon oil chambers 1f and 1g at opposite ends of the

stepped cylinder 1a. When hydraulic pressure acts upon the oil chamber 1g, the first piston 1b is moved downward together with the second piston 1c, whereby gears are shifted to the R, 2 and 4 speed side illustrated in the figure. When hydraulic pressure acts upon the oil chamber 1f, only the first piston is moved upward in the drawing, whereby shifting is effected to the L, 3 and 5 speed side. Magnetic valves 2 and 3 operate to connect the oil chambers 1g and 1f of the actuator to either a hydraulic pressure source 4 or a tank 5.

A gear shift fork shaft 6 has a gear shift block 7 engaging with the distal end of the gear shift lever 1e. Attached to the shaft 6 is a gear shift fork 8 the distal end of which is engaged with a clutch sleeve 9. A synchro block ring 11 is moved by an insert key 10. A transmission gear 12 has a dog gear 12a meshing with the clutch sleeve 9.

A detent mechanism 13 comprises a spring 13a and a steel ball 13b. The gear shift fork shaft 6 is provided with three positioning grooves 13c, corresponding to the gear shift positions L, neutral and R, by way of example. The steel ball 13b is urged into contact with one of the grooves 13c by the spring 13a, so that the gear shift stroke position of the gear shift fork shaft 6 is held under a constant pressure.

A stroke sensor 14 senses the stroke position of the piston rod 1d. An electronic control unit 15 is constituted by a computer, having input and output devices, various memories and a central processor. Based on an output from the stroke sensor 14 and various signals indicative of engine rpm, vehicle speed, select lever and accelerator pedal positions, the electronic control unit 15 selectively actuates the gear shifting magnetic valves 2 and 3 to place the shift actuator into any of the three positions mentioned above.

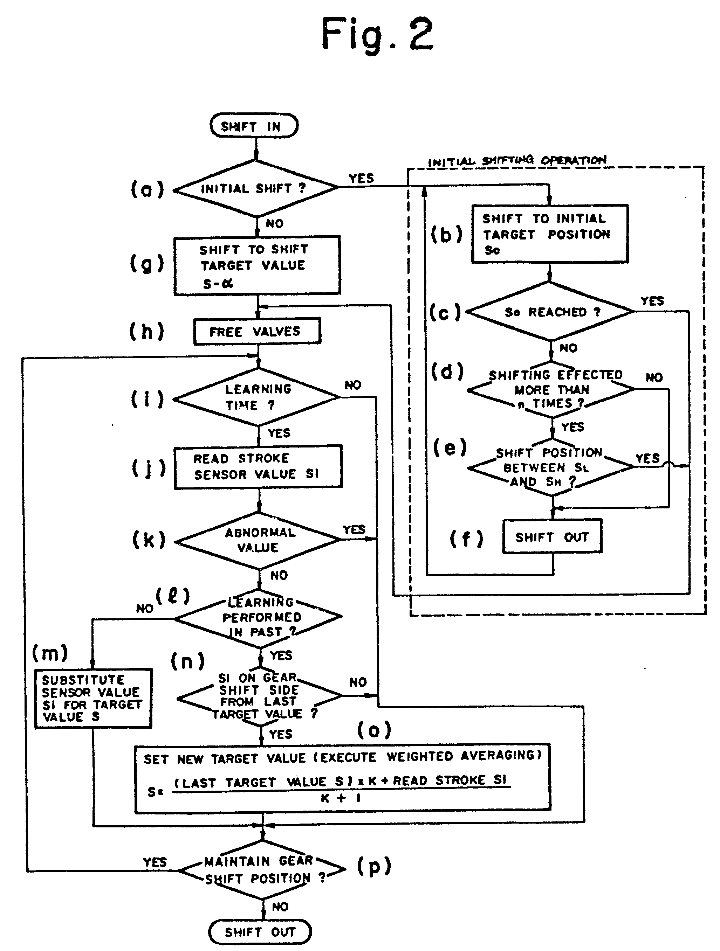

The operation of the shift control apparatus of the present embodiment, constructed as illustrated above, will now be described with reference to the flowchart of Fig. 2.

When a gear shift instruction is issued, the electronic control unit 15 executes a step (a) to determine whether the shift is an initial gear shift. This is done by checking the learned value (which will be 0 if learning has not taken place) of the gear shift stage. If it is found that learning has not yet taken place, it is decided that an initial gear shift is to be performed. The program then proceeds to a step (b), at which the electronic control unit 15 effects a gear shift towards an initial target position So, considered to be the furthest gear shift position (i.e. as far as the position of a gear stopper) from the viewpoint of terms of design and manufacture for the particular gear stage. After issuance of the gear shift instruction, the electronic control unit 15 reads in the present value from the stroke sensor and determines whether the stroke position has reached the position So [step (c)]. If the position So has not been reached after a predetermined period of time of t seconds, the gear shifting operation is halted, the gears are disengaged and an attempt is made to shift gears again [step (f)]. The purpose of repeating the disengagement of the gears is to eliminate gear engagement in mid-course. If the So position has not been reached even after n repetitions, the electronic control unit 15 renders a decision [step (d)] to the effect that the particular transmission has been designed to have a short gear shaft stroke and not a gear shaft stroke of maximum dimensions. When the short stroke is found to be the case, it is determined at a step (e) whether the value lies between maximum and minimum design values $S_L$ and $S_H$. If this is found to be the case [YES at step (e)], then the initial gear shifting operation is construed as being completed. If it is found at the step (c) that the So position has been reached, or if the YES answer is obtained at the step (e), learning is deemed to have occurred, and subsequent processing is executed accordingly. The general features of the learning operation are described below. A more detailed discussion appears in the specification of the above-mentioned Japanese Patent Application N° 59-239125.

If learning has already taken place, the electronic control unit 15 effects a gear shift to a position of a gear shift target value S - α [step (g)]. In other words, the electronic control unit 15 turns off the gear shift magnetic valves at a point ahead of the gear shift target position by an amount α (an amount which takes overshoot into consideration). This is done in anticipation of overshoot of the shift actuator 1 after the magnetic valves have been turned off, and prevents the gear from being damaged by an excessive stroke. As soon as the gear shift fork shaft passes through the target value S - α, the magnetic valves are turned off to connect the oil chambers 1f and 1g of the shift actuator 1 to the tank 5, in order to free the actuator 1 [step (h)]. When the shift actuator 1 is thus freed, the gear shift fork shaft 6 is oscillated by the gears and is able to move freely within the detent mechanism 13.

Thereafter, when a learning timing instant arrives at a step (i), the electronic control unit 15 reads a present value Si of the gear shift stroke from the stroke sensor 14 at a step (j) and compares this value with a predetermined range to judge whether the value lies within a normal stroke range [step (k)]. If an abnormality is detected, the read value is deemed to be erroneous and learning has not been carried out.

If no abnormality is detected at the step (k), the program proceeds to a step (ℓ), at which it is determined whether learning has taken place in the past . If the immediately preceding gear shifting operation was an initial shift, a learned value of gear shifting does not exist [NO at step (ℓ)]. Therefore, the present value Si of the gear shift stroke is substituted for the target value S at a step (m).

If the immediately preceding gear shifting operation was not an initial shift, or if the initial gear shift step (m) has been traversed, then learning has taken place and the currently prevailing read value Si from the stroke sensor 14 is compared with the learned value (the last target value) to determine whether Si is on the gear shift side [step (n)]. If a YES answer is received at the step (n), averaging processing is performed at a step (o) in such a manner that the gear shift stroke position furthest to the gear shift side is adapted as a target stroke for the next gear shift of this gear stage. The averaging processing is executed in accordance with the equation

$$S = [(S \times K) + Si]/K + 1$$

In the above equation, S on the left hand side is the target shift stroke position, S on the right hand side is the last target value, Si stands for the present shift stroke position, and K represents a weighting coefficient. Performing weighted averaging reduces the influence of reading erroneous data.

After the averaging processing is executed, it is decided at a step (p) whether the gear shift position obtained as the result of such processing is to be maintained. If the decision is affirmative, then the processing from step (i) to step (p) is repeated.

In the present invention, a gear shift target value is set to the furthest gear shift position, from the viewpoint of design and manufacture, considered for the particular gear stage. This prevents inadequate and excessive gear shifting caused by control based on design values. By effecting shifting based on learning after the initial shifting operation, gear shifting can be performed reliably and safely without being influenced by variations in the dimensions of the transmission coupling mechanism, backlash, variations in the characteristics of the stroke sensor and wear of the gear shift lever and gear shift block.

Though the present invention has been described based on the illustrated embodiment, the invention is not limited solely to that embodiment. For example, though the embodiment includes the use of a hydraulic actuator as the shift actuator, it is permissible to employ an actuator operated by pneumatic or negative pressure.

## Claims

1. A method of controlling the shifting of an automotive automatic transmission which includes a detent mechanism (13) for performing shift positioning of a shift fork shaft (6) which actuates a clutch sleeve (9) of the transmission, a shift actuator (1) for actuating the shift fork shaft, a stroke sensor (14) for sensing an operating position of the shift actuator, and an electronic control unit (15) for controlling driving of the shift actuator, the method being characterised by a first step (b) in which the electronic control unit operates the shift actuator at an initial shifting operation of the transmission to move the shift fork shaft for each and every gear stage to an initial deepest target gear shift position (So); a second step (h) in which the electronic control unit removes driving force from the shift actuator at the end of the first step; a third step (j), executed at the end of the second step, in which the electronic control unit reads in a value (Si) from the stroke sensor which prevails when the detent mechanism is in a stable state; and a fourth step (m), executed after the third step, in which the electronic controle unit selects the value read from the stroke sensor as target value for the next shifting operation.

2. A method according to claim 1, characterised by a fifth step (d) in which, if the initial target shift position (So) is not attained within a predetermined period of time after a gear shifting operation starts in the first step (b), the electronic control unit (15) halts the operation and restarts the gear shifting method in a sixth step (f).

3. A method according to claim 2, characterised by a step (e) in which the electronic control unit (15) judges whether a present gear shift position is of a value between maximum and minimum values ($S_L$, $S_H$) of a gear shift position from the viewpoint of design dimensions of the automatic transmission, and judges whether an initial gear shifting operation is completed if the present gear shift position is between the maximum and minimum values, this step being executed in a case where the initial target gear shift position is not attained even when the gear shifting operation has been repeated a predetermined number of times in the fifth step (d).

4. A shift control apparatus for a vehicular automatic transmission comprising a respective shift fork shaft (6) for operating each clutch sleeve (9) of the transmission, each shaft being equipped with a shift positioning detent mechanism (13), the shift control apparatus being characterised by a shift actuator (1) for actuating the shift forkshaft; a stroke sensor (14) for sensing an operating position of the shift actuator; reading means (15) for reading in a value from the stroke sensor which prevails in a state where the detent mechanism has stabilised, after the shift actuator has moved the shift fork shaft for each gear stage to an initial deepest target gear shift position (So) in an initial shifting operating of the transmission and driving force has been removed from the value read by the reading means as a target value for the next shifting operation.

5. Apparatus according to claim 4, characterised in that the shift actuator (1) is a hydraulic actuator.

6. Apparatus according to claim 4 or claim 5, characterised in that the transmission is a parallel shaft gear-type transmission.

## Patentansprüche

1. Verfahren zum Steuern des Schaltvorganges bei einem automatischen Fahrzeuggetriebe, das mit einem Rastmechanismus (13) zur Festlegung von Schaltpositionen einer Schaltgabelwelle (6), mit der eine Schaltmuffe (9) des Getriebes betätigt wird, einer Schalteinrichtung (1) zur Betätigung der Schaltgabelwelle, einem Wegmesser (14) zur Messung einer Betriebsposition der Schalteinrichtung und mit einer elektrischen Steuereinrichtung (15) zur Steuerung der Betätigung der Schalteinrichtung versehen ist, gekennzeichnet durch einen ersten Schritt (b), bei dem die elektrische Steuereinrichtung die Schalteinrichtung in einer Anfangsschaltoperation des Betriebes betätigt, um die Schaltgabelwelle für jeden einzelnen Gang in eine tiefste Anfangsschaltposition (So) zu bewegen; einen zweiten Schritt (h), bei dem die elektronische Steuereinrichtung jede Antriebskraft aus der Schalteinrichtung am Ende des ersten Schrittes beseitigt; einen dritten Schritt (j), der am Ende des zweiten Schrittes ausgeführt wird, bei dem die elektronische Steuereinrichtung einen Wert (Si) von dem Wegmesser einliest, der vorherrscht, wenn der Rastmechanismus sich in einem stabilen Zustand befindet; und einen vierten Schritt (m), der nach dem dritten Schritt ausgeführt wird und bei dem die elektronische Steuereinrichtung den Wert wählt, der von dem Wegmesser als Zielwert für die nächste Schaltoperation eingelesen worden ist.

2. Verfahren nach Anspruch 1, gekennzeichnet durch einen fünften Schritt (d), bei dem eine Schaltoperation bei dem ersten Schritt (b) beginnt, wenn die anfängliche Zielschaltposition (So) nicht innerhalb einer vorgegebenen Zeitspanne erreicht worden ist, wobei die elektronische Steuereinrichtung (15) die Operation anhält und das Schaltverfahren in einem sechsten Schritt (f) neu beginnt.

3. Verfahren nach Anspruch 2, gekennzeichnet durch einen Schritt (e), bei dem die elektronische Steuereinrichtung (15) abschätzt, ob eine derzeitige Gangwechselposition einen Wert zwischen Maximum-Minimum-Werten ($S_L$, $S_H$) einer Gangwechselposition aus der Sicht der Konstruktionsabmessungen des automatischen Getriebes hat, und abschätzt, ob eine Anfangsschaltoperation abgeschlossen ist, wenn die derzeitige Gangwechselposition sich zwischen den Maximum-Minimum-Werten befindet, wobei dieser Schritt in dem Fall ausgeführt wird, in dem die anfängliche Zielgangschaltposition nicht erreicht wird, selbst wenn die Schaltoperation eine vorgegebene Anzahl von Malen im fünften Schritt (d) wiederholt worden ist.

4. Vorrichtung zum Steuern des Schaltvorganges bei einem automatischen Fahrzeuggetriebe mit jeweils einer Schaltgabelwelle (6) zur Betätigung jeder Schaltmuffe (9) des Getriebes, wobei jede Welle mit einem Schaltrastmechanismus (13) versehen ist, gekennzeichnet durch eine Schalteinrichtung (1) zur Betätigung der Schaltgabelwelle; einen Wegmesser (14) zur Messung einer Betriebsposition der Schalteinrichtung; Lesemitteln (15) zum Einlesen eines Wertes des Wegmessers, der in einem Zustand vorherrscht, bei dem der Rastmechanismus sich stabilisiert hat, nachdem die Schalteinrichtung die Schaltgabelwelle für jeden Gang in eine anfängliche, tiefste Zielschaltposition (So) in einer Anfangsschaltoperation des Getriebes bewegt hat und nachdem die Antriebskraft aus der Schalteinrichtung entfernt worden ist; und durch Mittel zur Wahl des Wertes, der durch die Lesemittel als Zielwert für die nächste Schaltoperation eingelesen worden ist.

5. Vorrichtung nach Anspruch 4, dadurch gekennzeichnet, daß die Schalteinrichtung (1) ein Hydraulikzylinder ist.

6. Vorrichtung nach Anspruch 4 oder 5, dadurch gekennzeichnet, daß das Getriebe ein Vorgelegegetriebe mit zwei parallelen Wellen ist.

## Revendications

1. Procédé pour commander le changement de vitesse d'une transmission automatique pour véhicule, comportant un mécanisme à verrouillage (13) pour réaliser, lors du changement de vitesse, le positionnement d'une tringle (6) de fourchette de changement de vitesse qui actionne un baladeur (9) de la transmission, un actionneur (1) de changement de vitesse pour actionner la tringle de fourchette de changement de vitesse, un détecteur de course (14) pour détecter la position, relative à cette opération, du changement de vitesse, et une unité de commande électronique (15) pour commander le pilotage de l'actionneur de changement de vitesse, le procédé étant caractérisé par un premier pas (b) dans lequel l'unité de commande électronique fait fonctionner l'actionneur de changement de vitesse, dans une operation initiale de changement de vitesse de la transmission, pour amener la tringle de fourchette de changement de vitesse, pour chaque et pour tout étage de réduction de vitesse, à une position cible initiale de la fourchette de changement de vitesse qui est la position extrême possible (So); un second pas (h) dans lequel l'unité de commande électronique supprime la force d'entraînement provenant de l'actionneur de changement de vitesse à la fin du premier pas; un troisième pas (j), exécuté à la fin du second pas, dans lequel l'unité de commande électronique lit, sur le détecteur de course, la valeur (Si) qui correspond à la position dans laquelle le mécanisme de verrouillage se trouve dans un état stable; et un quatrième pas (m), exécuté après le troisième pas, dans lequel l'unité de commande électronique sélectionne la valeur lue sur le détecteur de course comme valeur cible pour la prochaine opération de changement de vitesse.

2. Procédé selon la revendication 1, caractérisé par un cinquième pas (d) dans lequel, si la position cible initiale de la fourchette de changement de vitesse (So) n'est pas atteinte dans un intervalle de temps prédéterminé après démarrage d'une opération de changement de vitesse au premier pas (b), l'unité de commande électronique (15) arrête l'opération et remet en route le procédé de changement de vitesse au sixième pas (f).

3. Procédé selon la revendication 2, caractérisé par un pas (2) dans lequel l'unité de commande électronique (15) juge si la valeur correspondant à la position réelle de la fourchette de changement de vitesse se situe entre une valeur maximale et une valeur minimale ($S_L$, $S_H$) d'une position de la fourchette de changement de vitesse, ceci en se basant sur les dimensions de conception de la transmission automatique, et juge si une opération initiale du changement de vitesse est achevée si la position réelle de la fourchette de changement de vitesse se situe entre la valeur maximale et la valeur minimale, ce pas étant exécuté dans le cas où on n'atteint pas la position cible initiale de la fourchette de changement de vitesse même après avoir répété l'opération de changement de vitesse un nombre prédéterminé de fois au cinquième pas (d).

4. Dispositif de commande du changement de vitesse pour une transmission automatique pour véhicule, comportant une tringle respective (6) de fourchette de changement de vitesse pour manoeuvrer chaque baladeur (9) de la transmission, chaque tringle étant équipée d'un mécanisme (13) de verrouillage du changement de vitesse en position, le dispositif de commande du changement de vitesse étant caractérisé par un actionneur de changement de vitesse (1) pour actionner la tringle de fourchette de changement de vitesse; par un détecteur de course (14) pour détecter une position, relative à une opération, de l'actionneur du changement de vitesse; par des moyens de lecture (15) pour lire, sur le détecteur de course, une valeur qui correspond à un état dans lequel le mécanisme à verrouillage est stabilisé, après que l'actionneur de changement de vitesse ait, pour chaque étage de réduction de vitesse, amené la tringle de fourchette de changement de vitesse à une position cible initiale de fourchette de changement de vitesse qui est la position extrême possible (So), au cours d'une opération initiale de changement de vitesse de la transmission, et après que la force d'entraînement ait été supprimée par l'actionneur de changement de vitesse; ainsi que par des moyens pour sélectionner la valeur lue par les moyens de lecture en tant que valeur cible pour la prochaine opération de changement de vitesse.

5. Appareil selon la revendication 4, caractérisé en ce que l'actionneur de changement de vitesse (1) est un actionneur hydraulique.

6. Appareil selon la revendication 4 ou la revendication 5, caractérisé en ce que la transmission est une transmission du type à pignons à arbres parallèles.

# Fig. 1

# Fig. 2

SHIFT IN

(a) INITIAL SHIFT ?  —— YES

INITIAL SHIFTING OPERATION

(b) SHIFT TO INITIAL TARGET POSITION So

(c) So REACHED ? —— YES

NO

(d) SHIFTING EFFECTED MORE THAN n TIMES ? —— NO

YES

(e) SHIFT POSITION BETWEEN $S_L$ AND $S_H$ ? —— YES

(f) SHIFT OUT

NO

(g) SHIFT TO SHIFT TARGET VALUE S-α

(h) FREE VALVES

(I) LEARNING TIME ? —— NO

YES

(j) READ STROKE SENSOR VALUE SI

(k) ABNORMAL VALUE —— YES

NO

(ℓ) LEARNING PERFORMED IN PAST ? —— NO

YES

(m) SUBSTITUTE SENSOR VALUE SI FOR TARGET VALUE S

(n) SI ON GEAR SHIFT SIDE FROM LAST TARGET VALUE ? —— NO

YES

(o) SET NEW TARGET VALUE (EXECUTE WEIGHTED AVERAGING)

$$S = \frac{(\text{LAST TARGET VALUE } S) \times K + \text{READ STROKE SI}}{K + 1}$$

(p) MAINTAIN GEAR SHIFT POSITION ? —— YES

NO

SHIFT OUT